# EUROPEAN PATENT APPLICATION

(11) **EP 3 395 546 A1**
(43) Date of publication of application: **31.10.2018**
(21) Application number: 17382236.2
(22) Date of filing: 28.04.2017
(51) Int. Cl.: B29C 65/10, F21S 8/10

(54) **NOZZLE FOR A HOT GAS WELDING TOOL AND METHOD OF MANUFACTURING A LIGHTING DEVICE**

(71) Applicant: Valeo Iluminacion, 23600 Martos (ES)
(72) Inventor: FUENTES, Manuel, 23600 Martos (ES); ANDRES, Alvaro, 23600 Martos (ES); GAMEZ, Jose, 23600 Martos (ES); RODRIGUEZ, Noemi, 23600 Martos (ES); GALLARDO, Jose-Manuel, 23600 Martos (ES); MARTINEZ-COBLER, Jose, 23600 Martos (ES); JIMENEZ, Raul, 23600 Martos (ES)

(57) **Abstract**

This invention relates to a nozzle comprising a coupling portion (2), intended to be coupled to at least two hot gas outlets (11) of a welding tool (10), and a transition portion (3), connected to the coupling portion (2). The transition portion (3) has a first width (w31) in the connection between the transition portion (3) and the coupling portion (2), and has a second width (w32) in an end opposite to the connection between the transition portion (3) and the coupling portion (2), the second width (w32) being greater than the first width (w31).

## Description

### TECHNICAL FIELD

This invention belongs to the field of welding procedures for welding parts of lighting devices.

### STATE OF THE ART

Welding is often used to join two or more parts of complex automotive lighting devices. This method is usually used to weld parts which include the housing and the outer lens.

Hot gas welding, is a good option when looking for an effective method, and is valid for this purpose, but it may cause a so called "worm effect" in the welded parts. This effect is due to a lack of homogeneity in the welding procedure and provides worse mechanical properties (such as adherence) in joined parts than traditional welding.

Advantages of hot gas welding over traditional welding can be summarized in that hot gas welding allows a better temperature control and is less harmful to plastic parts.

However, due to this "worm effect", its use is not very extended, furthermore when considering than lighting devices are used to see and to be seen, the final aspect of the welded part is then important.

### DESCRIPTION OF THE INVENTION

The invention provides a solution for this problem by means of a nozzle for a hot gas welding tool according to claim 1 and a method of manufacturing an automotive lighting device according to claim 15. Preferred embodiments of the invention are defined in dependent claims.

In an inventive aspect, the invention provides nozzle for a hot gas welding tool, the hot gas welding tool comprising at plurality of hot gas outlets, the nozzle comprising
a coupling portion, intended to be coupled to at least two hot gas outlets of the welding tool,
a transition portion, connected to the coupling portion;
the transition portion having a first width in the connection between the transition portion and the coupling portion, and having a second width in an end opposite to the connection between the transition portion and the coupling portion, the second width being greater than the first width.

The width of any of these portions should be understood as the distance measured in a first direction, which corresponds to the direction of joining two consecutive gas outlets, since the nozzle is intended to be coupled to these gas outlets.

The length of any of these portions should be understood as the distance measured in a second direction, perpendicular to the first one, and corresponding to the direction of the gas exiting the gas outlets.

The height of any of these portions should be understood as the distance measured in a third direction, perpendicular to the first and to the second one.

The nozzle of the invention may be an integral piece of a hot gas welding tool or may be a separate part. The advantage provided by this nozzle is the reduction of the distance between hot gas ejected by two adjacent nozzles. In the standard case, each gas outlet eject gas, and the distance between gas ejected by two adjacent outlets is the distance between two gas outlets. However, in a tool comprising two nozzles according to the invention, the distance between gas ejected by two adjacent outlets is reduced, since the width of the nozzle is higher than the width of the original outlet.

In some particular embodiments, the nozzle further comprises an outflow portion connected to the transition portion in the end of the second width the outflow portion having a first width in the connection between the transition portion and the outflow portion, and having a second width in the end opposite to the connection between the transition portion and the outflow portion, the second width being at least the same as the first width.

In these embodiments, the outflow portion allows the nozzle a more directed ejection of hot gas. This outflow portion may be tuned, for achieving an even more accurate direction of this ejection. Further, gas is limited during a longer distance, and flow is thereby uniformized.

In some particular embodiments, the area of the cross section of the outflow portion in the connection between the transition portion and the outflow portion is lower than the area of the cross section of the coupling portion.

Advantageously, the gas flow running along these nozzles is accelerated, and a more effective heating may be achieved for the same power, since heat is selectively concentrated.

In some embodiments, the second width of the outflow portion is higher than the first width of the outflow portion.

Advantageously, this feature allows the distance between outflow portions of adjacent nozzles be minimized.

In some particular embodiments, the outflow portion has walls, the thickness of the walls being lower than 0.5 mm.

The thinner the walls are, the easier to conform and the lower the distance between the gas flow of two adjacent nozzles. Forming of nozzles is an important question, since a fine tune is usually necessary after the installation of these nozzles in a hot gas welding tool.

In some particular embodiments, the transition portion has a first height in the connection between the transition portion and the coupling portion, and has a second height in the end opposite to the connection between the transition portion and the coupling portion, the second height being lower than the first height.

Decreasing the height in the transition portion contributes to a better positioning of final hot flow, since the hot gas is more controlled.

In some particular embodiments, the nozzle further comprises flow aligners, the flow aligners being suitable for orienting a hot flow coming from the coupling portion towards a direction closer to the direction of the fluid exiting the hot gas outlets.

These flow aligners make the flow be more uniform when reaching the part to be welded, aiming to achieve a flatter velocity profile than the one present without them.

In some particular embodiments, the flow aligners comprise at least one of balls, grains, grid elements, mesh elements, wherein the distance between two adjacent flow aligners is lower than the third part of the first height of the transition portion.

This size is suitable for the flow aligners to achieve its aim, since this distance is enough to affect the hot gas flow.

In some particular embodiments, the flow aligners are located in the coupling portion.

The coupling portion is an advantageous location for these flow aligners, since this portion of the nozzle is previous to the flow acceleration performed in the transition portion.

In some particular embodiments, the flow aligners have a melting temperature higher than 100ºC.

This melting temperature is enough to keep its solid state when receiving the hot gas flow.

In some particular embodiments, the flow aligners have a characteristic dimension lower than 0.5 mm.

This characteristic dimension should be understood as the diameter of a sphere with the same volume as the flow aligner. This size is advantageous for thermal phenomena.

In some particular embodiments, the nozzle is at least partially made of metal, and in further particular embodiments, the metal comprises at least one of aluminium or steel.

These metals, as heat conductive materials, contribute to create a more uniform temperature gradient, which is particularly advantageous to avoid the "worm effect". Further, these metals are advantageous, since they are not expensive and they are easy to conform.

In some particular embodiments, the coupling portion comprises tubes intended to be coupled to at least two hot gas outlets of the welding tool.

These embodiments are especially suitable for welding tools which have bare gas outlets. Some welding tools have a slight portion of tube inside the gas outlet, and this portion of tube stands out from said gas outlet. In these cases, the nozzle is coupled to this outstanding portion of tube. In other cases, the welding tool does not comprise any portion of tube in its gas outlets. As a consequence, a nozzle with an incorporated portion of tube is necessary to couple the nozzle to the welding tool correctly.

In some particular embodiments, the coupling portion is tangent in at least part of its surface to at least part of the hot gas outlets where the nozzle is intended to be coupled to.

Both in the cases where the gas outlets already comprise a portion of a tube and where the gas outlets do not comprise it, the coupling portion fits the geometry of the gas outlet. In the event the gas outlet comprises a portion of a tube, at least part of the coupling portion is externally tangent to part of this portion of a tube, so that the coupling portion fits the portions of tube of the corresponding gas outlets. In the event the gas outlet does not comprise any portion of a tube, the coupling portion is internally tangent to the gas outlet, in the same way the portion of a tube would be.

In a further inventive aspect, the invention provides a method of manufacturing an automotive lighting device, the method comprising the steps of
providing a hot gas welding tool with hot gas outlets, such that the hot gas welding tool comprises at least a nozzle according to any of the preceding claims installed in a plurality of hot gas outlets,
ejecting hot gas through the nozzle to weld pieces of the automotive lighting device.

This method makes the hot gas reach the pieces to be welded more uniformly.

In some particular embodiments, the method further includes the step of tuning the position of the outlet portion of the nozzles before ejecting hot gas.

This method allows the correction of errors in the positioning of the final exit of the hot gas.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a nozzle according to the invention.
Figure 2 shows a detail of flow aligners in a particular embodiment of a nozzle according to the invention.
Figure 3 shows a first example of a hot gas welding tool.
Figure 4 shows a detail of the welding tool of Figure 3, where a nozzle according to the invention is press fitted.
Figure 5 shows a second example of a hot gas welding tool.
Figure 6 shows a detail of the welding tool of Figure 5, where a nozzle according to another embodiment of the invention is press fitted.
Figure 7 shows a welding tool comprising nozzles according to the invention, welding two parts of a lighting device by a method according to the invention.

### DETAILED DESCRIPTION OF THE INVENTION

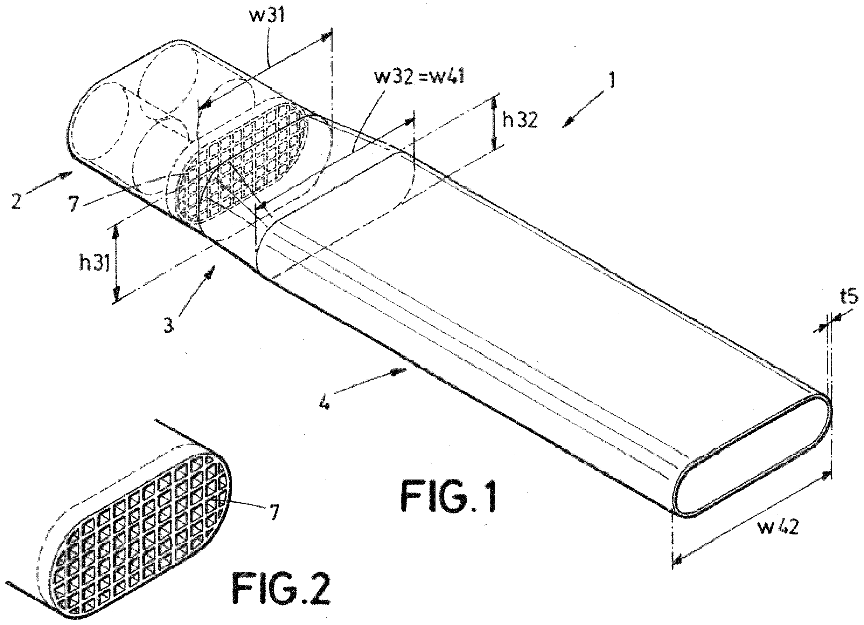

Figure 1 shows a schematic view of a nozzle 1 according to the invention. This nozzle 1 comprises
a coupling portion 2, intended to be coupled to at least two hot gas outlets of the welding tool,
an outflow portion 4,
a transition portion 3, connecting the coupling portion 2 to the outflow portion 4.

The transition portion 3 has a first width w31 in the connection between the transition portion and the coupling portion, and has a second width w32 in the connection between the transition portion and the outflow portion, the second width w32 being greater than the first width w31.

Although present in the embodiments shown in these figures, the outflow portion 4 is not an essential element of the invention, since the transition portion 3 ends in a section with a greater width than the coupling portion 2. Hence, in other embodiments, the outflow portion 4 does not exist, and the gas reaches the parts to be welded from the end of the transition portion 3.

The outflow portion 4 has a first width w41 in the connection between the transition portion 3 and the outflow portion 4, and has a second width w42 in the end opposite to the connection between the transition portion 3 and the outflow portion 4, the second width w42 being the same as the first width w41. However, in other embodiments, the second width w42 could be also slightly higher than the first width w41.

The first width w41 of the outflow portion 4 is the same as the second width w32 of the transition portion 3, because the transition portion 3 ends in the same section as the outflow portion 4 starts.

In this nozzle 1, the area of the cross section of the outflow portion 4 in the connection between the transition portion 3 and the outflow portion 4 is lower than the area of the cross section of the coupling portion 2.

In this nozzle 1, the transition portion 3 has a first height h31 in the connection between the transition portion 3 and the coupling portion 2, and has a second height h32 in the connection between the transition portion 3 and the outflow portion 4, the second height h32 being lower than the first height h31.

This nozzle 1 of this embodiment is made of stainless steel, and the thickness t5 of the walls 5 of the outflow portion is less than 0.3 mm, so that fine tune may be made easily. However, other suitable materials and suitable thicknesses could be chosen for nozzles 1 according to different embodiments within the scope of the invention.

This nozzle 1 is suitable for being installed or being part of a hot gas welding tool.

This nozzle 1 further comprising flow aligners 7. These flow aligners 7 are present in the nozzle 1 to orient the hot flow coming from the hot gas welding tool. The flow aligners 7 are located in the coupling portion 2, in order to achieve that the flow velocity profile is flatter than in the coupling portion.

To achieve this aim, the flow aligners may be one of balls, grains, grid elements, mesh elements. The skilled person knows how a suitable pattern of one or more of these elements is adequate for making the hot flow be more oriented according to the longitudinal direction, and therefore the heat contained in this flow may be more useful for the welding of the lighting device parts.

Figure 2 shows a detail of these flow aligners in a particular embodiment of a nozzle according to the invention. In this figure, it can be observed how the distance between two adjacent flow aligners is lower than the third part of the first height h31 of the transition portion 3: more than three rows of grids are comprised in the first height 31, so the distance between two grids is lower than the third part of the first height h31. This figure shows a grid, but, as stated before, any other element suitable for this purpose is considered within the scope of this invention.

These flow aligners have a characteristic dimension lower than the thickness of the nozzle, for a good thermal behaviour of the nozzle.

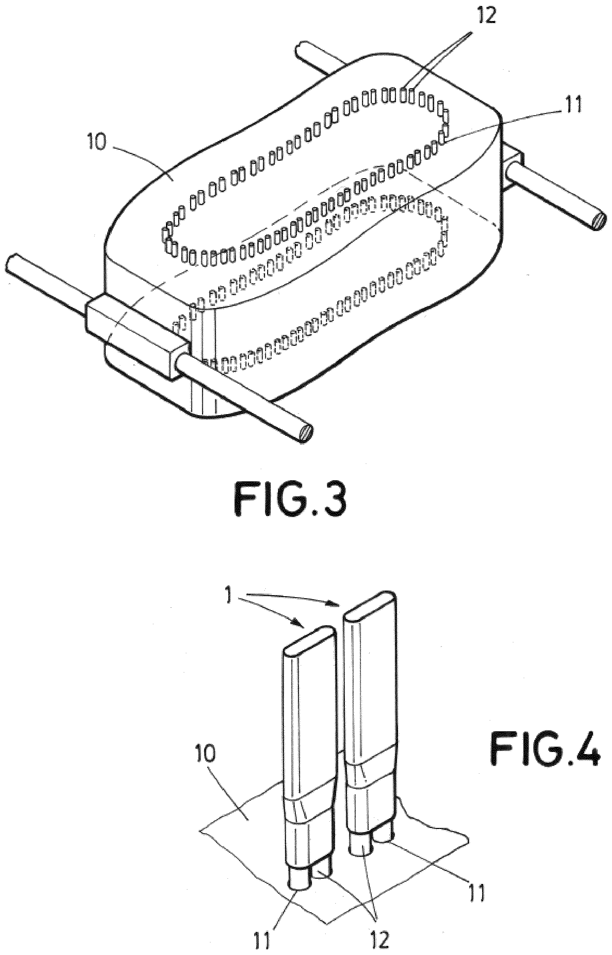

Figure 3 shows a hot gas welding tool 10 with a plurality of hot gas outlets 11. These hot gas outlets 11 comprise a portion of a tube 12, so that part of this portion outstands from the welding tool 10.

Figure 4 shows a detail of the welding tool 10 of Figure 3, where a nozzle 1 according to the invention is press fitted. In this embodiment, the nozzle 1 of the invention is press fitted against the parts of the portion of tubes 12 which outstands the welding tool 10. For this purpose, the coupling portion 3 of the nozzle 1 is externally tangent in at least part of its surface to at least part of the portion of tubes 12 installed in the hot gas outlets 11 where the nozzle 1 is intended to be coupled to.

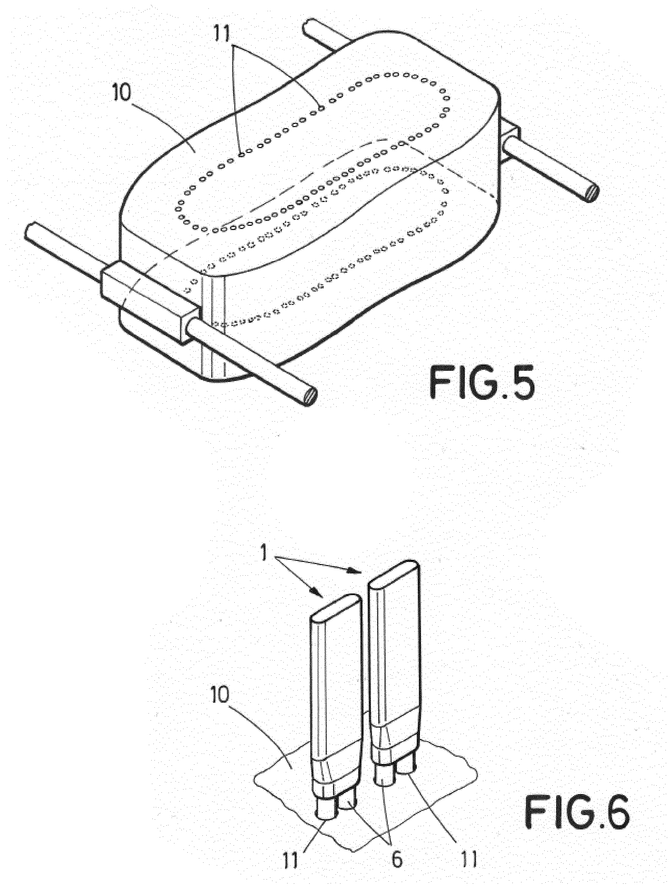

Figure 5 shows a hot gas welding tool 10 with a plurality of hot gas outlets 11. These hot gas outlets 11 do not comprise a portion of a tube, so that part of this portion outstands from the welding tool 10.

Figure 6 shows a detail of the welding tool 10 of Figure 5, where a nozzle 1 according to another embodiment of the invention is press fitted. In this embodiment, the nozzle 1 of the invention comprises tubes 6 intended to be coupled to at least two hot gas outlets 11 of the welding tool 10. The tubes 6 of the nozzle 1 are press fitted against the hot gas outlets 11 of the welding tool 10. For this purpose, the tubes 6 are internally tangent in at least part of its surface to at least part of the hot gas outlets 11 where the nozzle 1 is intended to be coupled to.

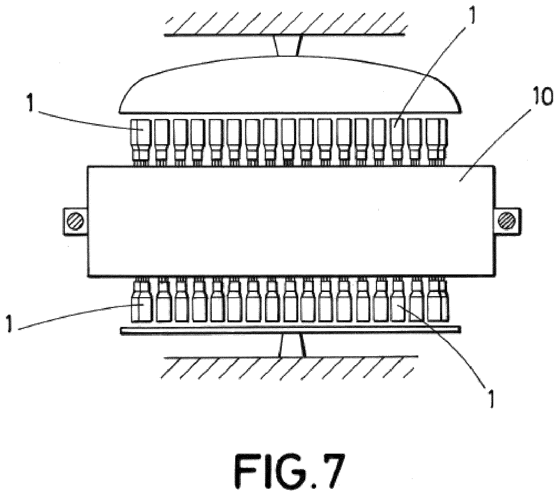

Figure 7 shows a welding tool 10 comprising nozzles 1 according to the invention, each nozzle 1 being installed in a pair of hot gas outlets 11. This welding tool 10 is welding two parts of a lighting device by ejecting hot gas through the nozzle 1.

## Claims

1. Nozzle (1) for a hot gas welding tool (10), the hot gas welding tool (10) comprising at plurality of hot gas outlets (11), the nozzle (1) comprising
a coupling portion (2), intended to be coupled to at least two hot gas outlets (11) of the welding tool (10),
a transition portion (3), connected to the coupling portion (2);
the transition portion (3) having a first width (w31) in the connection between the transition portion (3) and the coupling portion (2), and having a second width (w32) in an end opposite to the connection between the transition portion (3) and the coupling portion (2), the second width (w32) being greater than the first width (w31).

2. Nozzle (1) according to claim 1, further comprising an outflow portion (4) connected to the transition portion in the end of the second width (w32), the outflow portion (4) having a first width (w41) in the connection between the transition portion (3) and the outflow portion (4), and having a second width (w42) in the end opposite to the connection between the transition portion (3) and the outflow portion (4), the second width (w42) being at least the same as the first width (w41).

3. Nozzle (1) according to claim 2, wherein the area of the cross section of the outflow portion (4) in the connection between the transition portion (3) and the outflow portion (4) is lower than the area of the cross section of the coupling portion (2).

4. Nozzle (1) according to any of claims 2 or 3, wherein the second width (w42) of the outflow portion (4) is higher than the first width (w41) of the outflow portion (4).

5. Nozzle (1) according to any of claims 2 to 4, wherein the outflow portion (4) has walls (5), the thickness (t5) of the walls being lower than 0.5 mm.

6. Nozzle (1) according to any of the preceding claims, wherein the transition portion (3) has a first height (h31) in the connection between the transition portion (3) and the coupling portion (2), and has a second height (h32) in the end opposite to the connection between the transition portion (3) and the coupling portion (2), the second height (h32) being lower than the first height (h31).

7. Nozzle (1) according to any of the preceding claims, further comprising flow aligners (7), the flow aligners (7) being suitable for orienting a hot flow coming from the coupling portion towards a direction closer to the direction of the fluid exiting the hot gas outlets (11).

8. Nozzle (1) according to claim 7 when depending on claim 6, wherein the flow aligners (7) comprise at least one of balls, grains, grid elements, mesh elements, wherein the distance between two adjacent flow aligners (7) is lower than the third part of the first height (h31) of the transition portion (3).

9. Nozzle (1) according to any of claims 7 or 8, wherein the flow aligners (7) are located in the coupling portion (2).

10. Nozzle (1) according to any of claims 7 to 9, wherein the flow aligners (7) have a melting temperature higher than 100ºC.

11. Nozzle (1) according to any of claims 7 to 10, wherein the flow aligners (7) have a characteristic dimension lower than 0.5 mm.

12. Nozzle (1) according to any of the preceding claims, which is at least partially made of metal, particularly aluminium or steel.

13. Nozzle (1) according to any of the preceding claims, wherein the coupling portion (3) comprises tubes (6) intended to be coupled to at least two hot gas outlets (11) of the welding tool (10).

14. Nozzle (1) according to any of the preceding claims, wherein the coupling portion (3) is tangent in at least part of its surface to at least part of the hot gas outlets (11) where the nozzle (1) is intended to be coupled to.

15. Method of manufacturing an automotive lighting device, the method comprising the steps of
providing a hot gas welding tool (10) with hot gas outlets (11), such that the hot gas welding tool (10) comprises at least a nozzle (1) according to any of the preceding claims installed in a plurality of hot gas outlets (11),
ejecting hot gas through the nozzle (1) to weld pieces of the automotive lighting device.

16. Method according to claim 15, further including the step of tuning the position of the outlet portion (4) of the nozzles (1) before ejecting hot gas.
